# EUROPEAN PATENT SPECIFICATION

(11) **EP 1 395 446 B1**
(45) Date of publication and mention of the grant of the patent: **13.08.2008**
(21) Application number: 02741533.0
(22) Date of filing: 14.06.2002
(51) Int. Cl.: B60B 27/00

(54) **HUB BEARING UNIT WITH A SEPARATE AXLE STUB**
RADNABENLAGEREINHEIT MIT GETRENNTEM ACHSSCHENKEL
UNITE DE SUPPORT DE MOYEU AVEC DEMI-ESSIEU SEPARE

(30) Priority: 15.06.2001 NL 1018300
(43) Date of publication of application: 10.03.2004
(73) Proprietor: AB SKF, 415 50 Göteborg (SE)
(72) Inventor: TANKE, Jesko-Henning, D-97422 Schweinfurt (DE); DITTMAR, Rico, D-98574 Schmalkalden (DE); KAPAAN, Hendrikus, Jan, NL-3435 DM Nieuwegein (NL); HUHN, Norbert, D-97424 Schweinfurt (DE); GOTHBERG, Sven, S-421 59 V Frolunda (SE)
(74) Representative: van Westenbrugge, Andries
(86) International application number: PCT/NL2002/000393
(87) International publication number: WO 2002/102607

(56) References cited:
- EP-A- 0 529 252
- EP-A- 0 733 494
- EP-A- 0 906 855
- EP-A- 0 909 663
- DE-A- 19 827 073

## Description

The invention is related to a hub bearing unit, comprising an axle stub and a coaxial hub member which is rotatably supported with respect to the axle stub by means of two rolling element bearings.

Such a hub bearing unit is known from EP-A-0909663, and can in particular be applied in trucks. The object of the invention is to provide a hub bearing unit of this kind which can be preassembled, which can subsequently be detachably connected as a unit onto the vehicle axle and which has a simple construction.

This object is achieved in that the axle stub is provided with a rotational symmetric tapered portion or a cylindrical portion for connection of the axle stub to a correspondingly tapered or cylindrical bore respectively of a vehicle suspension axle, said tapered or cylindrical portion of said stub having a screw-threaded end for connection to a correspondingly screw-threaded bore of the vehicle axle.

The other end of the axle stub may have e.g. a hexagon on its outer end. Advantageously, the unit can also be dismounted as a unity. Therefore, it is not necessary to dismount the various parts of the unit separately.

The said tapered portion may be integrally formed with the axle stub; in the alternative, the tapered portion may be formed by a separate tapered sleeve positioned on a cylindrical end of the axle stub. Said tapered sleeve can be fixed in rotational direction by means of a key/groove connection, and axially by means of a circlip. Furthermore, the screw threaded end may be integrated with the tapered sleeve. The axle stub may also have a cylindrical portion.

At least one of the bearings may have a raceway which can be integrated in the axle stub. Also, one of the bearings may have an inner bearing ring which is fitted on the axle stub. A combination of an integrated raceway and a ring is also possible.

The axle stub may have a flange at its end facing away from the connection end, said flange being bent over so as to exert an axial preload on the adjoining inner ring. According to another embodiment, the axle stub may have a fixing nut at its end facing away from the connection end, said nut exerting an axial preload on the adjoining inner ring.

Furthermore, the rolling element bearings may have a common outer ring. Such common outer bearing ring may be provided with a mounting flange. Alternatively, said common outer bearing ring can be accommodated in a hub member which is provided with a wheel mounting flange, and/or a brake disc.

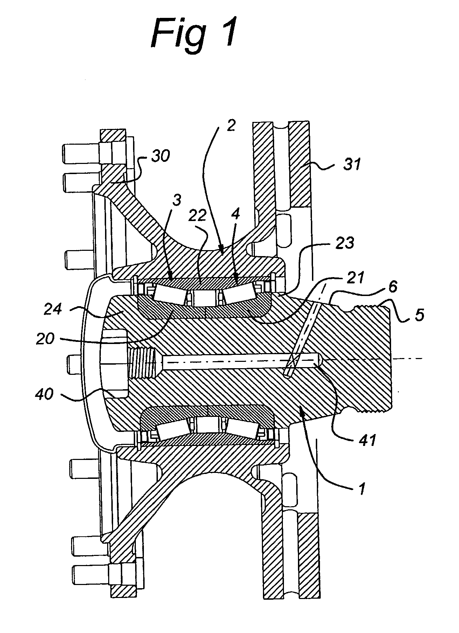

The invention will be described further with reference to the drawings. Fig. 1 - 4 show several embodiments of a hub bearing unit according to the invention.

The hub bearing units according to fig. 1 - 4 are each provided with an axle stub 1. A coaxial hub member 2 is rotatedly supported on the axle stub 1 by means of the two taper roller bearings 3, 4. According to the invention the axle stub 1 according to these embodiments are all provided with connection means, which will be described now.

In the embodiment of fig. 1, the axle stub 1 has a screw-threaded end 5 for connection in a correspondingly screw-threaded bore of a vehicle axle (not shown). Furthermore, said axle stub 1 has a tapered portion 6 joining the screw-threaded end 5. Said tapered portion 6 is intended to be connected in a correspondingly tapered bore of the vehicle axle (not shown). An oil injection channel 41 is provided for the purpose of facilitating the removal of the tapered portion 6 from its bore.

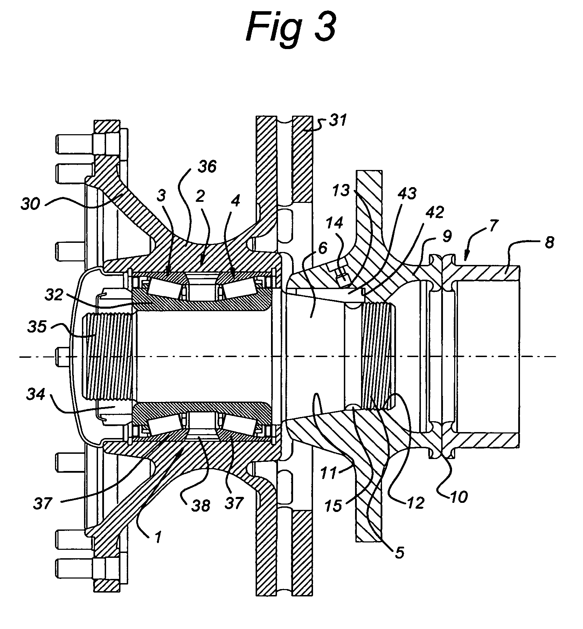

A similar layout is shown in fig 3, in combination with the vehicle axle 7. This vehicle axle 7 consists of the vehicle axle tube 8 and a connection ring 9 which are connected to each other by means of the friction weld 10. In the embodiment shown in the lower part of fig. 3, the connection ring 9 has a tapered bore 11 as well as a screw-threaded bore 12, which engage respectively the tapered portion 6 and the screw-threaded end 5 of the axle stub 1. Furthermore, the connection ring 9 comprises a screw-threaded bore 14, into which a locking screw can be provided which engages the axle stub 1 at the spot of its circumferential groove 15.

In the embodiment shown in the upper part of fig. 3, the connection ring 9 has a cylindrical bore 42 provided with a tapered sleeve 43. The tapered portion 6 of the axle stub 1 is accommodated in said tapered sleeve 43. Its screw threaded end 5 is screwed in the screw threaded bore 14 of connection ring 9.

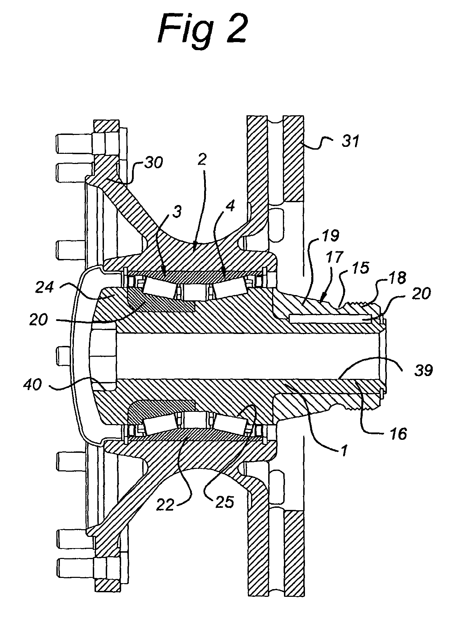

In the embodiment of fig. 2, the axle stub 1 has a cylindrical end 16 onto which the sleeve 17 is mounted. Said sleeve comprises a screw-threaded end 18 and a tapered portion 19, separated by a circumferential groove 15. Through the key/groove connection 20, the sleeve is fixed in a rotational direction with respect to the axle stub 1.

The axle stub has a throughgoing bore 39 which can be used for accommodating a wheel drive shaft (not shown). Moreover, as in the embodiment of fig. 1, a hexagon 40 has been provided for applying a torque.

In the embodiment of fig. 1, the two tapered roller bearings have each a separate inner ring 20, 21, as well as a common outer ring 22 which carry the raceways. The inner rings 20, 21 are accommodated between the flanges 23, 24. The latter flange 24 is bent over so as to provide the desired preload in the bearings 3, 4.

In the embodiment of fig. 2, a single separate inner ring 20 has been provided for the bearing 3, whereas the bearing 4 engages a raceway 25 which is integrated in the axle stub 1. The bearings 3, 4 again engage a common outer ring.

The embodiments of fig. 1 and 2 each have a flange 30 on to which a wheel can be mounted. Furthermore, the coaxial hub number 2 carries a brake disc 31. In the embodiment of fig 3, the taper roller bearings 3, 4 comprise a common inner ring 32, which is fixed by means of the nut 34 which is screwed onto the screw-threaded end 35 of the axle stub 1. The bearings 3, 4 have separate outer rings 36, 37 which are held spaced apart by means of the distance ring 38.

The connection ring 9 contains the fixation means for the brake calliper. These fixation means can also form one piece with the tapered or cylindrical portion 6 which fits in the connection ring 9.

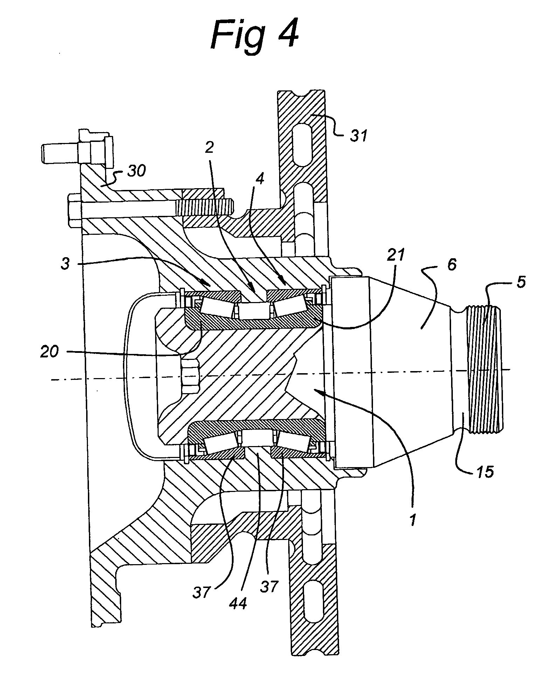

The embodiment of fig. 4 comprises bearings 3, 4, the outer rings 36, 37 of which are in abutting relationship with an internal shoulder 44 of the hub member 2 (matched bearings).

The tapered or cylindrical end of the axle stub in the embodiments described before may have a coating to avoid fretting corrosion.

## Claims

1. Hub bearing unit, comprising an axle stub (1) and a coaxial hub member (2) which is rotatably supported with respect to the axle stub (1) by means of two rolling element bearings (3, 4), **characterized in that** the axle stub (1) is provided with a rotational symmetric tapered portion (6; 19) or a cylindrical portion for connection of the axle stub (1) to a correspondingly tapered or cylindrical bore (11) respectively of a vehicle suspension axle (7), said tapered as cylindrical portion (6; 19) of said axle stub (1) having a screw-threaded end (5; 18) for connection to a correspondingly screw-threaded bore (12) of the vehicle axle (7).

2. Unit according to claim 1, wherein the tapered portion (6) is integrally formed with the axle stub (1).

3. Unit according to claim 2, wherein the tapered portion (19) is formed by a separate tapered sleeve (17) positioned on a cylindrical end (16) of the axle stub (I).

4. Unit according to claim 3, wherein the tapered sleeve (17) is fixed in rotational direction by means of a key/groove connection (20).

5. Unit according to claim 3, wherein the screw threaded end (18) is integrated with the tapered sleeve (17).

6. Unit according to any of the preceding claims, wherein the axle stub (1) is solid.

7. Unit according to any of the preceding claims, wherein the axle stub (1) has a through-going bore (39) which at its end facing away from the connection end opens out in a support face, said bore (39) being for accommodating a wheel drive shaft.

8. Unit according to any of the preceding claims, wherein at least one of the bearings (4) has a raceway (25) which is integrated in the axle stub (1).

9. Unit according to any of the preceding claims, wherein at least one of the bearings (3, 4) has an inner bearing ring (20, 21;32) which is fitted on the axle stub (1).

10. Unit according to any of the preceding claims, wherein setting means (34) are provided for setting a predetermined preload or play in the bearings (3, 4).

11. Unit according to claim 10, wherein the axle stub (1) has a flange (24) at its end facing away from the connection end, said flange (24) being bent over so as to exert an axial preload on the adjoining inner ring (20).

12. Unit according to claim 10, wherein the axle stub (1) has a fixing nut (34) at its end facing away from the connection end, said nut (34) exerting an axial preload on the adjoining inner ring (32).

13. Unit according to any of the preceding claims, wherein the rolling element bearings (3, 4) have a common outer ring (22).

14. Unit according to claim 13, wherein the common outer bearing ring is provided with a mounting flange (28).

15. Unit according to any of the preceding claims, wherein the rolling element bearings are tapered roller bearings (3,4).

16. Unit according to any of claims 1 - 14, wherein the rolling element bearings are ball bearings.

17. Unit according to any of the preceding claims, wherein a combination of a tapered rolling element bearing and a ball bearing is provided.

18. Unit according to claim 13, wherein the common outer bearing ring is accommodated in axial hub member which is provided with a wheel mounting flange (30), and/or a brake disc (31).

19. Unit according to any of the preceding claims, wherein the axle stub comprises two axle stub parts which are permanently connected to each other, e.g. by energy welding or friction welding.

20. Unit according to any of the preceding claims, wherein at least a sensor is provided for measuring rotating speed, temperature and/or load etc.

21. Unit according to any of the preceding claims, wherein the axle stub contains at least one passage for a liquid, gas or cables.

## Patentansprüche

1. Radlagervorrichtung mit einem Achsschenkel (1) und einem koaxialen Nabenelement (2), das mit Bezug auf den Achsschenkel (1) mittels zweier Wälzlager (3, 4) drehbar gelagert ist, **dadurch gekennzeichnet, dass** der Achsschenkel (1) mit einem rotationssymmetrischen Bereich (6; 19) oder einem zylindrischen Bereich zur Verbindung des Achsschenkels (1) mit einer entsprechend sich verjüngenden bzw. zylindrischen Bohrung (11) einer Achse (7) einer Fahrzeugaufhängung versehen ist, wobei der sich verjüngende oder zylindrische Bereich (6; 19) des Achsschenkels (1) ein Schraubgewindeende (5; 18) zur Verbindung mit einer korrespondieren Gewindebohrung (12) der Fahrzeugachse (7) aufweist.

2. Vorrichtung nach Anspruch 1, bei welcher der sich verjüngende Bereich (6) integral mit dem Achsschenkel (1) ausgebildet ist.

3. Vorrichtung nach Anspruch 2, bei welcher der sich verjüngende Bereich (19) durch eine separate, sich verjüngende Hülse (17) ausgebildet ist, die auf einem zylindrischen Ende (16) des Achsschenkels (1) angeordnet ist.

4. Vorrichtung nach Anspruch 3, bei welcher die sich verjüngende Hülse (17) in Drehrichtung mittels einer Keilnutverbindung (20) fixiert ist.

5. Vorrichtung nach Anspruch 3, bei welchem das Schraubgewindeende (18) in die sich verjüngende Hülse (17) integriert ist.

6. Vorrichtung nach einem der vorhergehenden Ansprüche, bei welcher der Achsschenkel (1) massiv ist.

7. Vorrichtung nach einem der vorhergehenden Ansprüche, bei welcher der Achsschenkel (1) eine Durchgangsbohrung (39) aufweist, die an ihrem von der Verbindung weg weisenden Ende sich in eine Stützfläche öffnet, wobei die Bohrung (39) zur Aufnahme einer Radantriebswelle dient.

8. Vorrichtung nach einem der vorhergehenden Ansprüche, bei welcher wenigstens eines der Lager (4) eine Laufbahn (25) besitzt, die in den Achsschenkel (1) integriert ist.

9. Vorrichtung nach einem der vorhergehenden Ansprüche, bei welcher wenigstens eines der Lager (3, 4) einen Lagerinnenring (20, 21; 32) aufweist, der auf dem Achsschenkel (1) aufgesetzt ist.

10. Vorrichtung nach einem der vorhergehenden Ansprüche, bei welcher Stellmittel (34) vorgesehen sind, um eine vorbestimmte Vorlast oder ein Spiel in den Lagern (3, 4) einzustellen.

11. Vorrichtung nach Anspruch 10, bei welcher der Achsschenkel (1) an seinem von dem Verbindungsende weg weisenden Ende einen Flansch (24) aufweist, der derart umgebogen ist, dass er eine axiale Vorlast auf den angrenzenden Innenring (32) ausübt.

12. Vorrichtung nach Anspruch 10, bei welcher der Achsschenkel (1) eine Befestigungsmutter (34) an seinem von dem Verbindungsende weg weisenden Ende aufweist, wobei die Mutter (34) eine axiale Vorlast auf den angrenzenden Innenring (32) ausübt.

13. Vorrichtung nach einem der vorhergehenden Ansprüche, bei welcher die Wälzlager (3, 4) einen gemeinsamen Außenring (22) besitzen.

14. Vorrichtung nach Anspruch 13, bei welcher der gemeinsame Außenring mit einem Montageflansch (28) versehen ist.

15. Vorrichtung nach einem der vorhergehenden Ansprüche, bei welcher die Wälzlager Kegelrollenlager (3,4) sind.

16. Vorrichtung nach einem der Ansprüche 1 bis 14, bei welcher die Wälzlager Kugellager sind.

17. Vorrichtung nach einem der vorhergehenden Ansprüche, bei welcher eine Kombination aus einem Kegelrollenlager und einem Kugellager vorgesehen ist.

18. Vorrichtung nach Anspruch 13, bei welcher der gemeinsame Außenring in einem axialen Nabenelement aufgenommen ist, das mit einem Radmontageflansch (30) und/oder einer Bremsscheibe (31) versehen ist.

19. Vorrichtung nach einem der vorhergehenden Ansprüche, bei welcher der Achsschenkel zwei Achsschenkelteile aufweist, die dauerhaft miteinander verbunden sind, z. b. durch Impulsschweißen oder Reibschweißen.

20. Vorrichtung nach einem der vorhergehenden Ansprüche, bei welchem wenigstens ein Sensor zum Messen der Drehzahl, der Temperatur und/oder der Last oder dergleichen vorgesehen ist.

21. Vorrichtung nach einem der vorhergehenden Ansprüche, bei welcher der Achsschenkel wenigstens einen Durchlass für eine Flüssigkeit, Gas oder Leitungen besitzt.

## Revendications

1. Unité de support de moyeu, comprenant une fusée d'essieu (1) et un organe de moyeu coaxial (2) qui est supporté en rotation par rapport à la fusée d'essieu (1) au moyen de deux éléments de roulement (3, 4), **caractérisée en ce que** la fusée d'essieu (1) est pourvue d'une partie conique symétrique en rotation (6; 19) ou d'une partie cylindrique pour la liaison de la fusée d'essieu (1) à un alésage correspondant respectivement conique ou cylindrique (11) d'un essieu de suspension de véhicule (7), ladite partie conique ou cylindrique (6; 19) de ladite fusée d'essieu (1) ayant une extrémité filetée (5; 18) pour la liaison à un alésage taraudé correspondant (12) de l'essieu de véhicule (7).

2. Unité selon la revendication 1, dans laquelle la partie conique (6) est formée d'un seul tenant avec la fusée d'essieu (1).

3. Unité selon la revendication 2, dans laquelle la partie conique (19) est formée par une douille conique séparée (17) positionnée sur une extrémité cylindrique (16) de la fusée d'essieu (1).

4. Unité selon la revendication 3, dans laquelle la douille conique (17) est fixée dans le sens de la rotation au moyen d'une liaison clavette/rainure (20).

5. Unité selon la revendication 3, dans laquelle l'extrémité filetée (18) est intégrée avec la douille conique (17).

6. Unité selon l'une quelconque des revendications précédentes, dans laquelle la fusée d'essieu (1) est pleine.

7. Unité selon l'une quelconque des revendications précédentes, dans laquelle la fusée d'essieu (1) comporte un alésage traversant (39) qui, à son extrémité tournée à l'opposé de l'extrémité de liaison, s'ouvre dans une face de support, ledit alésage (39) étant destiné à recevoir un arbre d'entraînement de roue.

8. Unité selon l'une quelconque des revendications précédentes, dans laquelle au moins l'un des roulements (4) comporte un chemin de roulement (25) qui est intégré dans la fusée d'essieu (1).

9. Unité selon l'une quelconque des revendications précédentes, dans laquelle au moins l'un des roulements (3, 4) comporte une bague de roulement intérieure (20, 21; 32) qui est ajustée sur la fusée d'essieu (1).

10. Unité selon l'une quelconque des revendications précédentes, dans laquelle des moyens de réglage (34) sont prévus pour régler une précharge ou un jeu prédéterminé dans les roulements (3, 4).

11. Unité selon la revendication 10, dans laquelle la fusée d'essieu (1) comporte une bride (24) à son extrémité tournée à l'opposé de l'extrémité de liaison, ladite bride (24) étant rabattue de manière à exercer une précharge axiale sur la bague intérieure attenante (20).

12. Unité selon la revendication 10, dans laquelle la fusée d'essieu (1) comporte un écrou de fixation (34) à son extrémité tournée à l'opposé de l'extrémité de liaison, ledit écrou (34) exerçant une précharge axiale sur la bague intérieure attenante (32).

13. Unité selon l'une quelconque des revendications précédentes, dans laquelle les éléments de roulement (3, 4) ont une bague extérieure commune (22).

14. Unité selon la revendication 13, dans laquelle la bague de roulement extérieure commune est pourvue d'une bride de montage (28).

15. Unité selon l'une quelconque des revendications précédentes, dans laquelle les éléments de roulement sont des roulements coniques (3, 4).

16. Unité selon l'une quelconque des revendications 1 à 14, dans laquelle les éléments de roulement sont des roulements à billes.

17. Unité selon l'une quelconque des revendications précédentes, dans laquelle est prévue une combinaison d'un élément de roulement conique et d'un roulement à billes.

18. Unité selon la revendication 13, dans laquelle la bague de roulement extérieure est reçue dans un organe de moyeu axial qui est pourvu d'une bride de montage de roue (30) et/ou d'un disque de frein (31).

19. Unité selon l'une quelconque des revendications précédentes, dans laquelle la fusée d'essieu comprend deux parties de fusée d'essieu qui sont reliées en permanence l'une à l'autre, par exemple par soudage par énergie ou par soudage par friction.

20. Unité selon l'une quelconque des revendications précédentes, dans laquelle au moins un capteur est prévu pour mesurer la vitesse de rotation, la température et/ou la charge, etc.

21. Unité selon l'une quelconque des revendications précédentes, dans laquelle la fusée d'essieu contient au moins un passage pour un liquide, un gaz ou des câbles.
